# EUROPEAN PATENT APPLICATION

(11) **EP 4 825 619 A1**
(43) Date of publication of application: **21.10.2026**
(21) Application number: 25170406.0
(22) Date of filing: 14.04.2025
(51) Int. Cl.: B60J 1/20, B60J 7/00

(54) **ROLLER BLIND ASSEMBLY FOR A VEHICLE ROOF SYSTEM**

(71) Applicant: Inalfa Roof Systems Group B.V., 5807 GW Oostrum (NL)
(72) Inventor: TEN-JET-FOEI, Suyanto Teri Wahiyu, 5807 GW Oostrum (NL); NELLEN, Marcel Johan Christiaan, 5807 GW Oostrum (NL); ALBERS, Thomas Anton Martijnszoon, 5807 GW Oostrum (NL)
(74) Representative: De Vries & Metman

(57) **Abstract**

The invention relates to a roller blind assembly for a vehicle, including a winding tube (22), a rollo screen (21) attached at one side to the winding tube and a pair of parallel rollo guides (25) for guiding the rollo screen. The rollo screen is movable along the rollo guides between a closed position and an opened position. And wherein the winding tube is configured for: winding up the rollo screen when moving from the closed position to the opened position, winding off the rollo screen when moving from the opened position to the closed position. The roller blind assembly further comprising a spring assembly (29) and a transmission (30), wherein the transmission is configured for tensioning the spring assembly in response to the winding tube winding off the rollo screen, and relaxing / un-tensioning the spring assembly in response to the winding tube winding up the rollo screen.

## Description

The present invention relates to a rollo assembly for a vehicle roof system. More in particular, the invention relates to a rollo assembly having a winding tube and a spring assembly.

### BACKGROUND

Vehicles, such as e.g. passenger cars, may be equipped with a roof or roof system having one or more roof panels. The roof panels may be movable between closed and open positions wherein a roof opening is covered or uncovered, or the roof panels may be fixed. In either case, one or more of the roof panels may be transparent to allow light to enter a passenger compartment of the vehicle. In order to be able to control the amount of light entering, the vehicle may be equipped with a roller or sun blind assembly, also referred to as a rollo assembly, including a rollo screen that is movable between closed and open positions, and any position therebetween i.e. partially closed or partially open. In the closed position, the rollo screen covers the glass panel thereby blocking the interior of a vehicle from light from outside. In the, partially, open position the rollo screen will uncover the glass roof panel. Movement of the rollo screen is enabled by winding it on or off a winding tube or shaft. In a fully opened position, the rollo screen is completely wound upon the winding tube. In the closed position, the rollo screen may be, almost, completely wound off from the winding tube.

In known rollo assemblies the rollo screen may be operated by drive cables driven by a motor, which drive cables are connected via slide shoes to an operating beam of the rollo screen. The operating beam may also be referred to as a pull beam, as it may pull the rollo screen, or it may further be referred to as a front beam, this in relation to its position relative to the front of the vehicle. The motor will drive movement of the drive cables, thereby moving the drive shoes and connected operating beam. Hence, pulling the pull beam away from the winding tube will roll off the rollo screen from the winding tube, whereas pulling the pull beam towards the winding tube will allow the rollo screen to wind up on the winding tube. Thereto, the winding tube is usually provided with a spring-like assembly to enable the winding when uncovering the roof opening by the rollo screen.

The diameter of the winding tube is determined by the spring-assembly residing inside the winding tube. In turn, spring-assembly properties are determined by the required torque to be provided for winding the rollo screen onto the winding tube when the rollo screen is moving from the closed to the opened position.

### SUMMARY OF INVENTION

It is an object of the invention to provide an alternative rollo assembly that allows for a reduction in z-package. For the roller blind assembly as described above, the diameter of the winding tube is determined by the spring assembly residing inside the winding tube. In turn, spring assembly properties are determined by the required torque to be provided for winding the rollo screen onto the winding tube. According to the invention, the limitations imposed by the spring assembly on the minimum diameter of the winding tube, and therewith the overall z-package of the rollo assembly are mitigated by a roller blind assembly according to the invention.

According to the invention, this object is achieved by providing a rollo assembly including a winding tube, an operating beam, a rollo screen attached at one side to the winding tube and at an opposite side to the operating beam, a pair of drive members connected to opposite ends of the operating beam, and a pair of parallel rollo guides for guiding the rollo screen. Wherein the rollo screen is movable along the rollo guides between a closed position and an opened position by driving the drive members. Wherein the winding tube is configured for winding up the rollo screen when moving from the closed position to the opened position, and for winding off the rollo screen when moving from the opened position to the closed position. The roller blind assembly further includes a spring assembly, and a first transmission. Wherein the first transmission is configured for tensioning the spring assembly in response to the winding tube winding off the rollo screen, and for un-tensioning the spring assembly in response to the winding tube winding up the rollo screen.

In another aspect, the invention relates to a roller blind assembly further including a spring reference point provided by a fixed world support member, or a spring reference point provided by a bias support member. And wherein the spring assembly is connected with one side to the spring reference point and with one side to the winding tube. And the spring assembly is arranged for tensioning relative to the winding tube and the reference point.

In a further aspect, the invention relates to a roller blind assembly wherein the first transmission provides a ratio between rotation of the winding tube and the spring assembly.

In yet a further aspect, the invention relates to a roller blind assembly wherein the spring assembly includes at least one spring element external of the winding tube.

In yet a further aspect, the invention relates to a roller blind assembly wherein the spring assembly includes at least two spring elements arranged in series or in parallel.

In yet a further aspect, the invention relates to a roller blind assembly wherein one of the at least two spring elements is arranged, at least partially, within another one of the at least two spring elements.

In yet a further aspect, the invention relates to a roller blind assembly wherein one of the at least two spring elements is arranged inside the winding tube.

In yet a further aspect, the invention relates to a roller blind assembly wherein the at least two spring elements provide different spring characteristics.

A first transmission facilitates setting a ratio between rotation of the winding tube and an outer end of the spring assembly, enabling to accommodate for different lengths of a roller blind screen.

A spring assembly of at least two spring elements facilitates adaptation of the number of revolutions of the spring assembly at which the spring assembly provides a predetermined torque. For example, at least two spring elements arranged in series will act jointly quasi-like one spring with an extended length for the same coil diameter. Or, for example, at least two spring elements arranged in parallel will act quasi-jointly like one spring with increased coil diameter for the same length. Or, instead of coil diameter, the thickness of the spring wire in case of a tension spring may be thinner or thicker. Either way, the amount of revolutions of (the outer end of) the spring assembly for providing the predetermined torque may be respectively increased or decreased.

Particular embodiments of the invention are set forth in the dependent claims.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1A illustrates a perspective view of an example of a vehicle roof with an open roof assembly;
FIG. 1B illustrates an exploded view of the open roof assembly of FIG. 1A;
FIG. 2A illustrates a perspective view of an embodiment of a rollo assembly in a closed position in accordance with the invention;
FIG. 2B illustrates the rollo assembly of FIG. 2A in a partially opened position;
FIGS. 3A and 3B illustrate in more detail a transmission of the rollo assembly of FIG. 2A;
FIG. 4 illustrates a schematic side view of the transmission of FIG. 3B;
FIG. 5A illustrates a prior art roller blind assembly with a torsion spring enclosed by a winding tube;
FIG. 5B is a cross section of the spring assembly of FIG. 5A;
FIG. 5C is a graph illustrating spring torque vs. rotation of the winding tube of FIG. 5A;
FIG. 6A illustrates an embodiment of a winding tube with a spring assembly in accordance with the invention;
FIG 6B is a graph illustrating spring torque and rotation of examples of the spring assembly of Fig. 6A;
FIGS. 7A - 7C illustrate various embodiments of spring assemblies in accordance with the invention;
FIGS. 8A and 8B illustrate further embodiments of spring assemblies in accordance with the invention;
FIG. 9A illustrates another embodiment of a roller blind assembly in accordance with the invention; and
FIG. 9B. is a graph illustrating spring torque and rotation of the spring assembly of FIG. 9A.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In addition, X-, Y- and Z-direction will refer to a direction corresponding to length, width and height of a vehicle. In the figures, a forward driving movement of a vehicle may e.g. be indicated by an arow D, pointing in a direction towards a front side of a vehicle. It will be understood that a roof system may be positioned in one orientation wherein forward closing and rearward opening direction of a roof panel align respectively with forward and rearward direction of a vehicle. And in another orientation wherein vice versa forward closing and rearward opening direction of the roof system align respectively with rearward and forward direction of a vehicle.

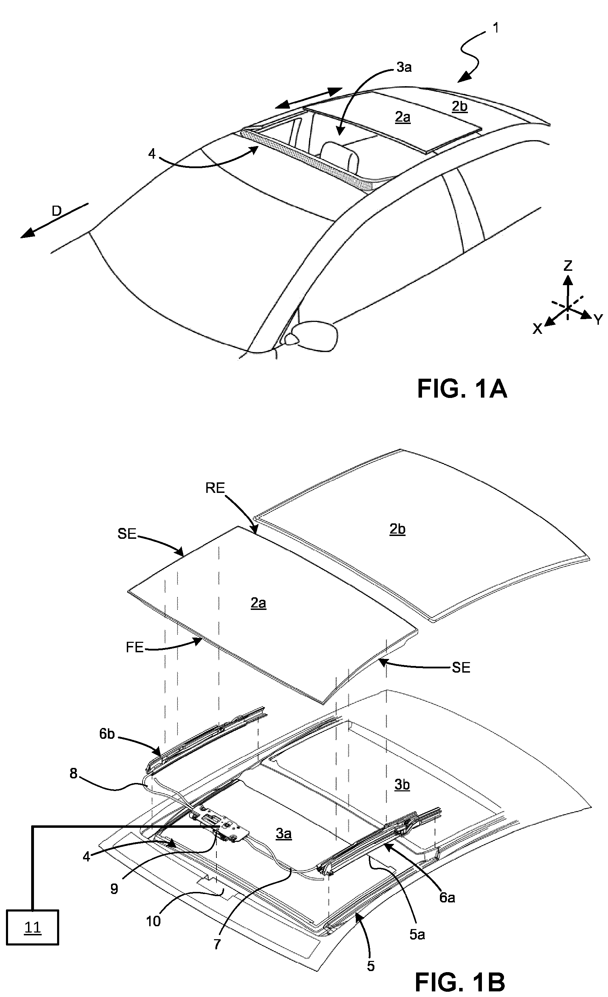

Figs. 1A and 1B illustrate a vehicle roof having an open roof assembly 1 arranged therein. The open roof assembly 1 comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed. In the open position, for example both the rear end RE and front end FE may be raised as compared to the closed position.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly 1 in the open position, Fig. 1B is an exploded view of the open roof assembly 1 in a closed position. Further, in this exploded view of Fig. 1B, it is shown that there is a second roof opening 3b. The first and second roof openings 3a, 3b are provided in a frame 5 of the open roof assembly 1. An edge 5a of the frame 5 defines the first roof opening 3a.

The second roof opening 3b is arranged under the fixed panel 2b such that light may enter a vehicle interior space through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly 1.

Fig. 1B further illustrates a drive assembly having a first guide assembly 6a, a second guide assembly 6b, a first drive cable 7 and a second drive cable 8, and a drive motor 9. The first and second guide assemblies 6a, 6b are arranged on respective side ends SE of the moveable panel 2a and may each comprise a guide and a mechanism. The guide is coupled to the frame 5, while the mechanism comprises moveable parts and is slidably moveable in the guide. The first and the second drive cables 7, 8 are provided between the mechanisms of the respective guide assemblies 6a, 6b and the drive motor 9.

The drive cables 7, 8 couple the drive motor 9 to the mechanisms of the respective guide assemblies 6a, 6b such that upon operating the drive motor 9, the mechanisms start to move. In particular, a core of the drive cable 7, 8 is moved by the drive motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the drive motor 9 is mounted at a recess 10 near or below the front end FE of the moveable panel 2a in the closed position. In another embodiment, the drive motor 9 may be positioned at any other suitable position or location. For example, the drive motor 9 may be arranged near or below the rear end RE of the moveable panel 2a in the closed position or below the fixed panel 2b.

A control unit 11 is schematically illustrated and is operatively coupled to the drive motor 9. The control unit 11 may be any kind of processing unit, either a software controlled processing unit or a dedicated processing unit, like an ASIC, as well known to those skilled in the art. The control unit 11 may be a stand-alone control unit or it may be operatively connected to an-other control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 9 and thus the moveable roof assembly 1.

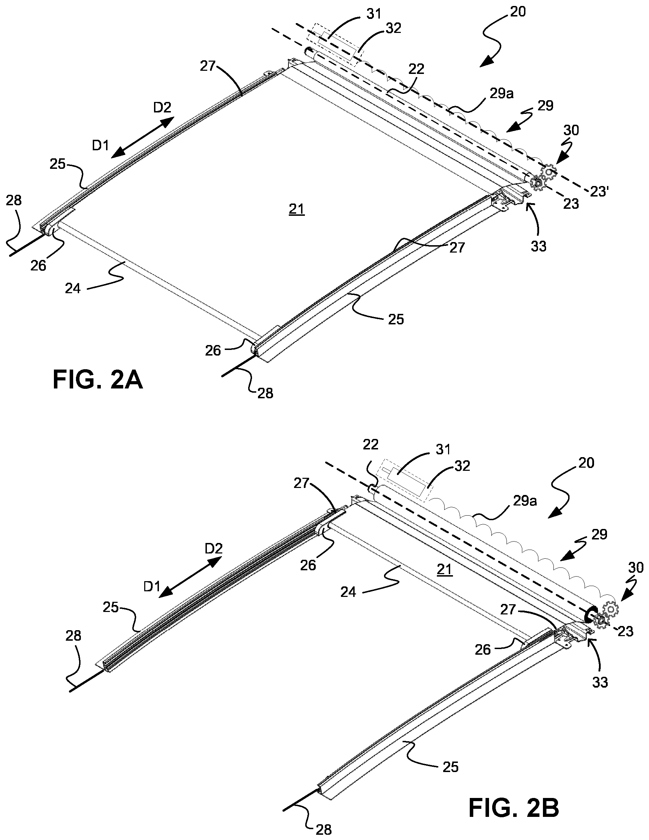

Referring to Fig. 2A and 2B, an example of a rollo assembly 20 is shown which may act as a sunscreen or sun blind assembly, and may for example be positioned below the movable roof panel 2a, or e.g. both the movable and fixed roof panels 2a, 2b. Thereto, it may be connected to the frame 5 of the roof assembly 1 of Fig. 1B, and it may form an integrated part of the roof assembly. In Figs. 2A and 2B, the rollo assembly 20 is shown respectively in a closed position and a partially opened position. The rollo assembly 20 includes a rollo screen 21 and a winding tube 22 which is rotatable around a stationary axis of rotation 23. The rollo screen 21 extends substantially in a first direction D1 and is connected to the winding tube 22. In an opposite second direction D2, the rollo screen is connected to an operating beam 24. The rollo assembly 20 further includes two parallel arranged rollo guides 25 and two sliders 26 connected to the operating beam 24 and arranged for movably sliding along one of the rollo guides 25 respectively. Together with the sliders 26, two opposite longitudinal edges 27 of the rollo screen 21 are arranged in the guides 25 and for moving in coherence with the sliders 26 through the rollo guides 25. The rollo guides 25 further support the rollo screen 21 and keep it in a desired position. The rollo assembly further includes a spring assembly 29 and a transmission 30 arranged for rotating along with the winding tube 22. The spring assembly includes at least one spring element 29a external of the winding tube 22.

In this example, a stationary frame part 33 provides support for the winding tube 22 and for the transmission 30. The guide rails 25, as in this example, may also be supported by the frame part 33.

When moving from the closed position to a partially or fully opened position, the rollo screen 21 is wound up on the winding tube 22 when rotated in a first direction. Along with the rotation of the winding tube 22, the tension of the spring assembly 29 is reduced as it unwinds via the transmission 30. The operating beam 24 is pulled by the sliders 26 slide along the rollo guides 25 in the first direction D1.

When moving from the partially or fully opened position to the closed position, the rollo screen 21 is wound off from the winding tube 22 when rotated in a second direction. Along with the rotation of the winding tube 22, the tension of the spring assembly 29 increases as it winds up via the transmission 30. The operating beam 24 is pulled by the sliders 26 slide along the rollo guides 25 in the second direction D2.

To further control the movement of the rollo screen 21, drive cables 28 may be connected to the sliders 26 for pulling or pushing the operating beam 24 in the second direction D2 or first direction D1. The drive cables 28 may be operated by a drive cable motor 31. To accommodate the drive cable motor 31, the rollo assembly 20 may include a mounting bay gap 32. The mounting bay gap 32 may provide room for positioning a mounting bay, a mounting bracket or other structure for accommodating a drive component, such as a motor or drive control unit. The mounting bay gap 32 and the external spring element 29a of the spring assembly 29 are accommodated along a virtual axis 23' in parallel to the winding tube 22. As may be seen in Fig. 2A, the length of the at least one external spring element 29a of the spring assembly 29a is less than the length of the winding tube 22, such that the length of the winding tube 22 extends beyond the combined length of the mounting bay gap 32 and the external spring element. The mounting bay gap may be provided by a mounting bracket, for example connected to the stationary frame part 33. Or it may be provided by a recess in the stationary frame part 33. Or it may be provided by another structural element able of supporting a motor.

Accordingly, the roller blind assembly as disclosed above includes the spring assembly and the transmission, which transmission is configured for tensioning the spring assembly in response to the winding tube winding off the rollo screen. And the transmission is further configured for un-tensioning the spring assembly in response to the winding tube winding up the rollo screen.

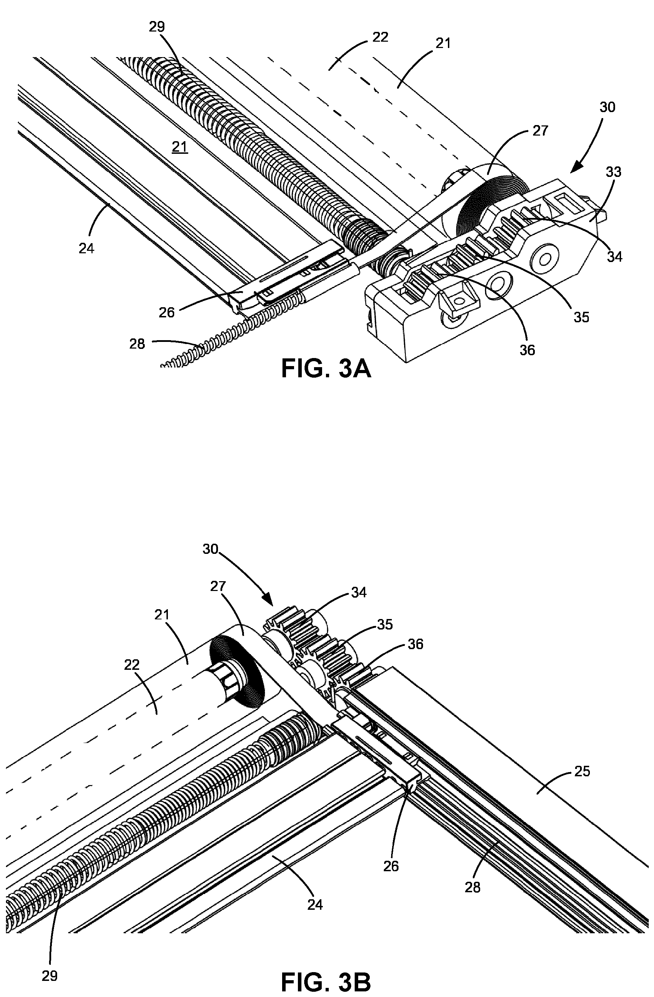

Referring to Figs. 3A and 3B, an example of a transmission 30 is shown in more detail. Further shown is the screen 21 that is partially wound up on the winding tube 22 which is indicated by dotted lines; the operating beam 24 at a front edge of the screen 21 which is connected via sliders 26 to the drive cables 28, and the longitudinal edge 27 of the screen, here embodied as a strip. The guide rail 25 wherein the longitudinal edge 27 or strip and sliders 26 are arranged is shown in Fig. 3B.

The transmission 30 is supported by the frame part 33 (not shown in Fig. 3B). The transmission 30, in this embodiment, includes three gear wheels 34, 35, 36 for transmitting the rotation between the winding tube 22 and the spring assembly 29. A tube gear wheel 34 is mounted on or at least in line with the axis of the winding tube 22 and will rotate in dependence of the movement of the screen 21 when driven by drive cables 28. An intermediate gear wheel 35 transfers the rotation of the tube gear wheel 34 to a spring assembly gear wheel 36. The spring assembly gear wheel 36 is mounted in a co-axial manner with the spring assembly. The size and dimension of the gear wheels provides a ratio between the rotation of the winding tube 22 and torque of the spring assembly 29. More in particular, the spring assembly is connected at one outer end to the winding tube, and a rotation, or a revolution, of the winding tube is thus transferred to the outer end of the spring assembly thereby changing the torque provided by the spring assembly. Hence, the transmission ratio may be chosen in relation to the characteristics of the spring assembly.

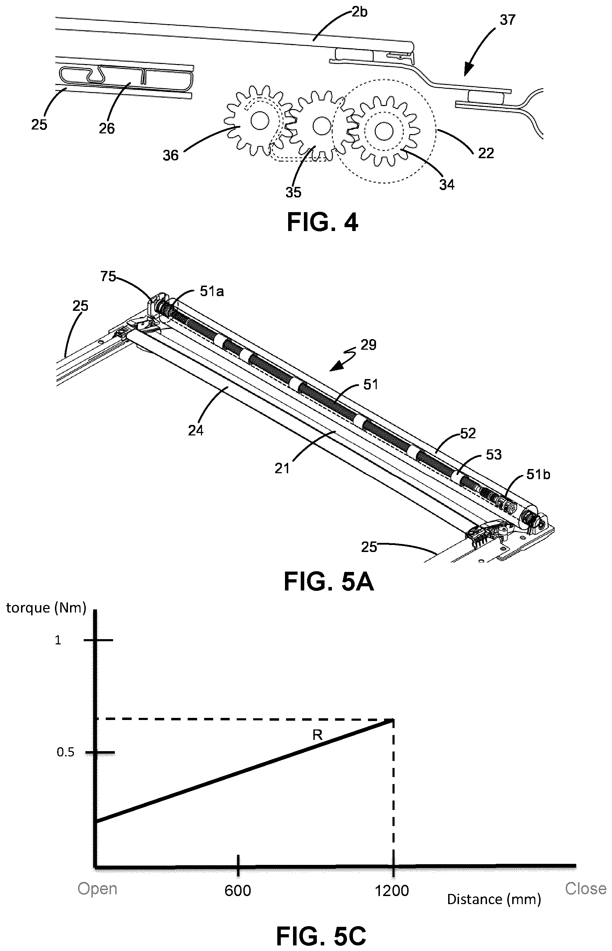

Referring to Fig. 4, a side view of the transmission 30 of Fig. 3B is illustrated in relation to the roof panel 2b and a rear frame part of the vehicle 1 of Fig. 1A. The guide rail 25 and stationary frame part 33 reside below the roof panel 2b. The gear wheel 34 is mounted on the axis of the winding tube -As can be seen, the gear wheels 34, 35, 36 may provide a difference in height between the winding tube 22 and the spring assembly. This further allows to balance the dimensions of the rollo assembly 20 for accommodating varying vehicle Z-package.

Referring to Fig. 5A, a rollo assembly according to prior art is illustrated. The winding tube 52 thereof is illustrated in a transparent manner in order show a torsion spring 51 residing within the winding tube 52, as according to prior art. The winding tube 52 includes spring supports 53 for maintaining the spring 51 in place.

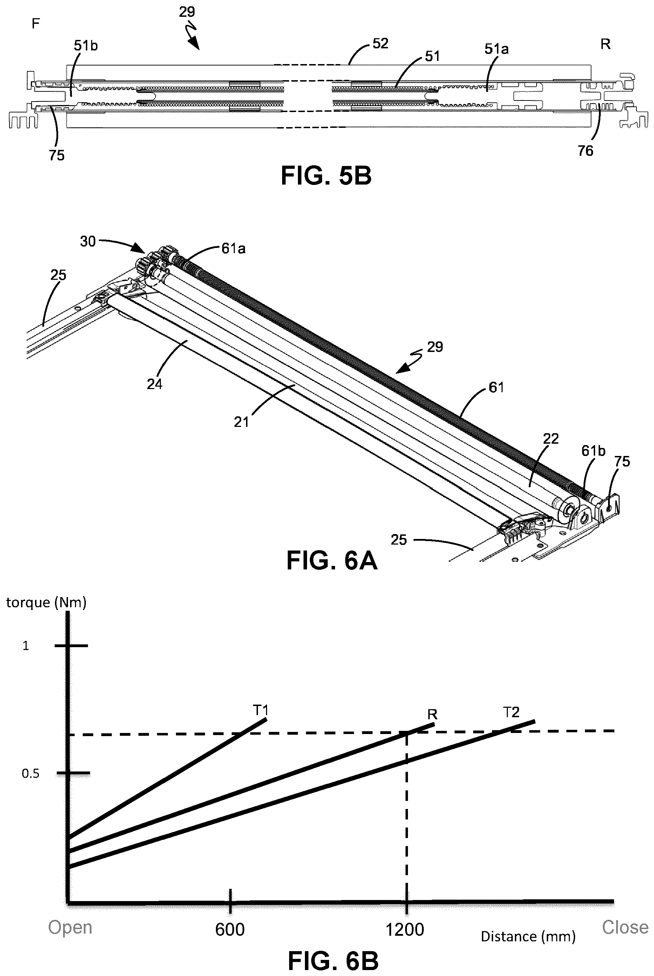

Fig. 5B shows the spring assembly 29 of Fig. 5A in more detail. Outer ends 51a, 51b of the spring element 51 are arranged in a different manner in the spring assembly 29. one outer end 51b is fixated to a static spring reference point 75, providing a fixator side F. The other outer end 51a is in fixed connection to an inner side of the winding tube 52, while the winding tube 52 may rotate freely about support 76, thereby providing a rotator side R. In this manner, the rotator side R ensures that rotation of the winding tube causes the spring element 51 to wind i.e. rotate together with the winding tube, thereby tensioning the spring assembly at the fixator side F relative to the spring reference point 75.

Fig. 5C shows a graph illustrating the relation between rotation of the winding tube 52 and torque of the torsion spring 51. The rotation of the winding tube correlates directly with the distance travelled by the rollo screen when winding up or off the winding tube. There is a linear relationship between the spring characteristic and the rotations, as with each rotation of the tube 52, the spring 51 will rotate synchronously. And with each rotation the torque building up in the spring 51 increases proportionally, in accordance with its spring constant.

Referring to Fig. 6A, a rollo assembly with a winding tube 22 and a spring assembly 29 with an external spring element 61 in accordance with the invention is illustrated. Fig. 6B shows a graph illustrating possible relations between rotation of the winding tube 22 and torque of the spring assembly 29. Again, the rotation of the winding tube correlates directly with the distance travelled by the rollo screen when winding up or off the winding tube. As the transmission 30 allows to adapt the ratio between winding tube 22 and spring assembly 29, the proportionality between rotation and torque is consequently adapted too. This facilitates additional freedom of design for selecting and tuning the spring assembly for a particular application of the rollo assembly. Such to accommodate various dimensions, and in particular Z-package, of varying vehicles and vehicle roof systems. Thus, Fig. 6B illustrates an option T1 wherein the spring torque increases more with rotation in comparison to the reference R, and thus the torque required for winding up the screen when opening is obtained with less rotations. And Fig. 6B illustrates an option T2 wherein the spring torque increases less with rotation in comparison to the reference R, and thus the torque required is obtained with more rotations.

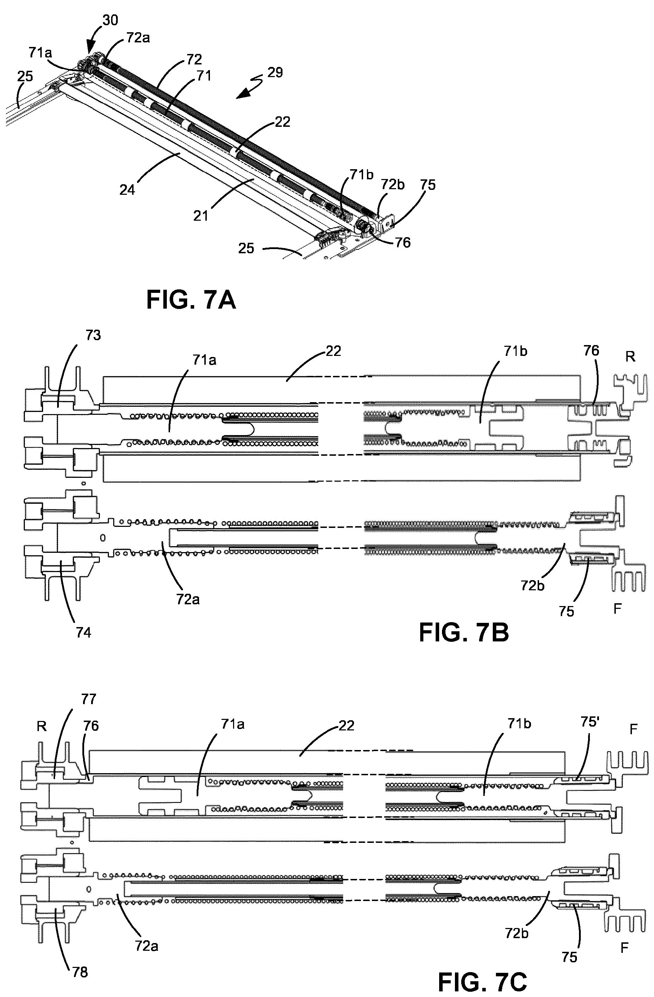

Referring to Figs. 7A - 7C various examples of spring assemblies are illustrated. In Fig. 7A, the spring assembly 29 is shown in perspective view having two spring elements 71, 72; a first spring element 71 inside the winding tube 22 and a second spring element 72 external of the winding tube 22. The spring assemblies 71, 72 may be arranged and connected to one another in series or in parallel, as explained further below in relation to Figs. 7B and 7C. Fig. 7B shows a cross section of the spring assembly 29 with spring elements 71, 72 arranged in series. And Fig. 7C shows a cross section of the spring assembly 29 with spring elements 71, 72 arranged in parallel. In Fig. 7B, one outer end 71b of the first spring element 71 provides a rotator side R and one outer end 72b of the second spring element 72 provides a fixator side F, similar to those as described in relation to Fig. 5B. In Fig. 7B, the other outer end 71a of the spring element 71 residing inside the winding tube 22 is connected to a gear 73, which is in contact with a gear 74 of the outer end 72a of the spring element 72. In operation, rotation of the winding tube 22 will cause the spring elements 71, 72 to rotate in relation to static reference point 75, thereby adapting the tensioning of the spring assembly 29.

In Fig. 7C, the other outer end 71a of the spring element 71 residing inside the winding tube 22 is connected to the inner side of the winding tube 22. The winding tube 22 is connected to a gear 77, which is in contact with gear 78 of the outer end 72a of the spring element 72. In operation, rotation of the winding tube 22 will cause the spring elements 71, 72 to rotate in relation to respective static reference points 75, 75', thereby adapting the tensioning of the spring assembly 29.

Thus, when arranged in series, rotation of the winding tube is transferred to one of the spring elements directly and via rotation of that one spring element to the other spring element indirectly. While, when arranged in parallel, rotation of the winding tube is transferred to each spring element separately. Accordingly, in parallel each spring element experiences the same amount of rotation of the winding tube. Whereas in series, rotation of the winding tube causes the spring element in direct fixed contact therewith to experience the same amount of rotation; and the second spring element, due to spring constant of the first spring may experience a different amount of rotation.

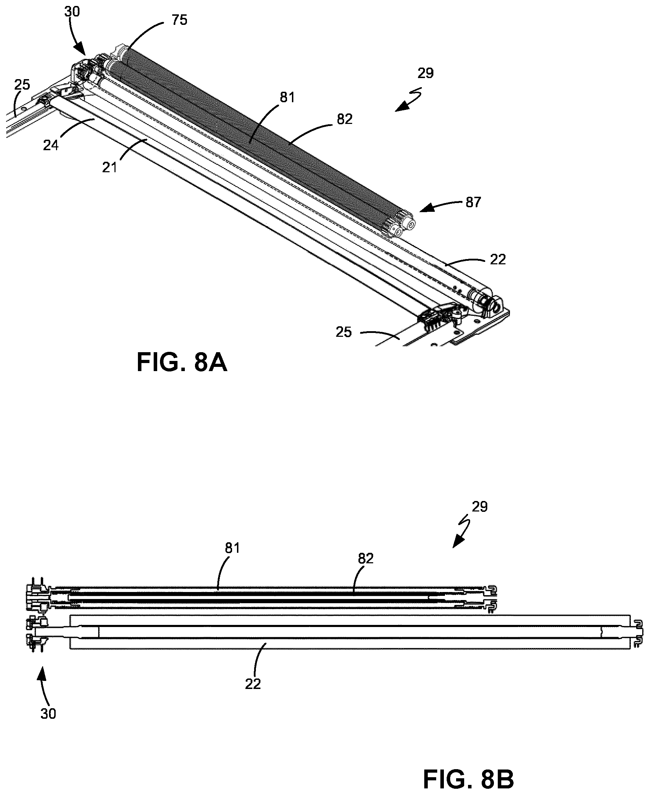

Referring to 8A and 8B, further examples of roller blind assemblies are illustrated. The roller blind assembly includes rollo screen 21 with operating beam 24, parallel rollo guides 25 for guiding the rollo screen 21, winding tube 22 for winding the rollo screen 21, and spring assembly 29. In Fig. 8A, the spring assembly 29 again includes two spring elements 81, 82. Here the first spring element 81 and the second spring element 82 are both external of the winding tube 22. The spring elements 81, 82 may be arranged either in series or in parallel, as explained above, via a second transmission 87. In this example, the spring elements are arranged in series, that is the spring elements 81, 82 are connected to one another via gears of the second transmission 87 and only one spring element 82 is connected to the spring reference point 75, while the other is connected to the winding tube 22. Here via gears of the first transmission 30. In another example, the spring elements may be arranged in parallel, that is the each of the spring elements 81, 82 may be provided at one outer end with a fixator side connected to a spring reference point. And on another outer end each spring element may be in contact with the winidng tube, for example via gears or a transmission.

In Fig. 8B, the spring assembly 29 includes again two spring elements 81, 82; here one of the two spring elements 82 is arranged, at least partially, within another 81 of the two spring elements 81, 82. The spring elements 81, 82 may be arranged either in series or in parallel, as explained above.

As may be understood from these variants, many variations may be possible by combining two or more spring elements in different configurations of series and / or parallel arrangements. Providing spring elements having different spring characteristics will further increase the manner in which a spring assembly may be provided. Furthermore, the length of spring assembly may

In the examples as described, the spring element may be or include a torsion spring. However, other options may be suitable as well, such as for example a spindle with a hydraulic or pneumatically operated element.

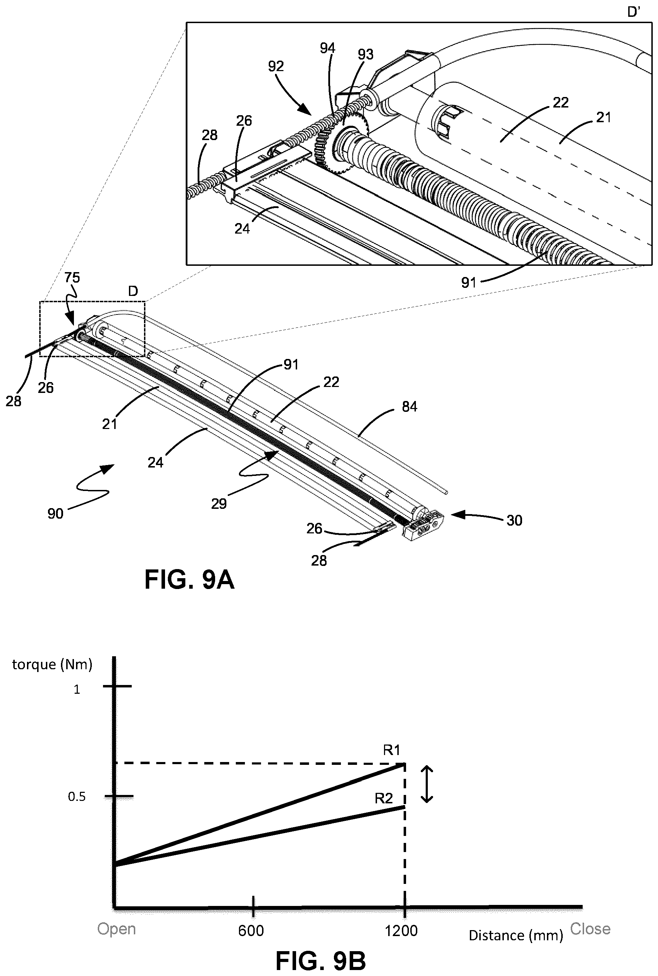

Referring to Fig. 9A, another embodiment of a rollo assembly 90 is illustrated. Fig. 9A also shows a cutout D of the rollo assembly in detail, see D'. The spring assembly 29 includes an external spring element 91 and a spring reference point 75. Here, instead of being provided by a fixed world support member, the spring reference point 75 is provided by a bias support member 92. The bias support member 92 is configured for adapting a bias setpoint of the spring reference point 75 in response to movement of the rollo screen 21.

The bias support member 92 includes, in this example, at least one bias wheel 93 and a bias drive member 94. The bias drive member 94 is configured for adapting the bias setpoint by driving the bias wheel 93. The bias drive member may be a belt, a drive cable or other component suitable for driving the bias wheel 93. Accordingly, movement of the rollo screen 21 by the drive cables 28 operated by the motor 31 may cause the bias drive member 94 to drive the bias wheel 93. The rotation of the bias wheel may change the tensioning and thereby torque of the spring element 91 and consequently, change the bias setpoint of the spring reference point 75. Thus, it may decrease or increase the tensioning of the spring element and thereby provide additional means for controlling the proportionality of the spring assembly in relation to rotations of the winding tube.

Referring to Fig. 9B shows a graph illustrating the relation between rotation of the winding tube 22 and torque of the spring assembly 29. Again, the rotation of the winding tube correlates directly with the distance travelled by the rollo screen when winding up or off the winding tube. Adapting the bias support member 92 by rotating the bias wheel 93 via the drive member 94, changes the relation between the rotation of the winding tube and the torque of the spring assembly. Accordingly, the relation therebetween may be changed between R1 and R2 at any given moment. For example, when moving the rollo screen from open to close, initially the torque may be set to increase at a first rate of R1, while when closing further the rate may be decreased to a second rate as indicated by R2.

As may be understood, regardless of whether the spring reference point 75 is provided by a fixed world support member or by a bias support member 92, the spring assembly 29 may be connected with one side to the spring reference point 75 and with one side to the winding tube 22. Whereby the spring assembly is arranged for tensioning relative to the winding tube and the reference point.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate de-pendent claims may be applied in combination and any advantageous combination of such claims are herewith disclosed.

Further, it is contemplated that structural elements may be generated by application of three-dimensional (3D) printing techniques. Therefore, any reference to a structural element is in-tended to encompass any computer executable instructions that in-struct a computer to generate such a structural element by three-dimensional printing techniques or similar computer-controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used here-in, is defined as two or more than two. The term another, as used herein, is defined as at least a second or more. The terms including and/or having, as used herein, are defined as comprising (i.e., open language). The term coupled, as used herein, is de-fined as connected, although not necessarily directly.

Although the present invention has been described above with reference to specific embodiments, it is not intended to be limited to the specific form set forth herein. Rather, the invention is limited only by the accompanying claims and other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A roller blind assembly for a vehicle, comprising:
a winding tube (22);
an operating beam (24);
a rollo screen (21) attached at one side to the winding tube (22) and at an opposite side to the operating beam (24);
a pair of drive members (28) connected to opposite ends of the operating beam (24); and
a pair of parallel rollo guides (25) for guiding the rollo screen (21);
wherein the rollo screen (21) is movable along the rollo guides (25) between a closed position and an opened position by driving the drive members (28);
wherein the winding tube (22) is configured for:
winding up the rollo screen (21) when moving from the closed position to the opened position, and
winding off the rollo screen (21) when moving from the opened position to the closed position;
the roller blind assembly further comprising:
a spring assembly (29); and
a first transmission (30);
wherein the first transmission is configured for:
tensioning the spring assembly (29) in response to the winding tube (22) winding off the rollo screen (21), and
un-tensioning the spring assembly (29) in response to the winding tube (22) winding up the rollo screen (21).

2. Roller blind assembly according to claim 1, wherein the first transmission (30) provides a ratio between rotation of the winding tube (22) and the spring assembly (29).

3. Roller blind assembly according to claim 1 or 2, the spring assembly (29) comprising at least one spring element external of the winding tube (22).

4. Roller blind assembly according to claim 3, the spring assembly (29) comprising
at least two spring elements arranged in series or in parallel.

5. Roller blind assembly according to claim 4, wherein one of the at least two spring elements is arranged, at least partially, within another one of the at least two spring elements.

6. Roller blind assembly according to claim 4 or 5, wherein one of the at least two spring elements is arranged inside the winding tube (22).

7. Roller blind assembly according to any of the preceding claims, wherein the at least one spring element comprises a torsion spring.

8. Roller blind assembly according to any of the preceding claims, further comprising:
a spring reference point (75) provided by a fixed world support member; or
a spring reference point (75) provided by a bias support member (92); and
wherein the spring assembly (29) is connected with one side to the spring reference point (75) and with one side to the winding tube (22), and the spring assembly (29) is arranged for tensioning relative to the winding tube (22) and the spring reference point (75).

9. Roller blind assembly according to claim 8, wherein the bias support member (92) is configured for adapting a bias setpoint of the spring reference point (75) in response to movement of the rollo screen (21).

10. Roller blind assembly according to claim 8 or 9, wherein the bias support member comprises:
at least one gearwheel (93) and a bias drive member (94); and
wherein the bias drive member (94) is configured for adapting the bias setpoint by driving the gearwheel (93).

11. Roller blind assembly according to any of the preceding claims, wherein the first transmission (30) comprises a gear box, a pulley system, or a drive belt.

12. Roller blind assembly according to any of the preceding claims 3 - 11, further comprising:
a mounting bay gap (32) for accommodating a drive component (31), such as a motor or drive control unit; and
wherein the mounting bay gap (32) and the at least one external spring element are accommodated along a virtual axis in parallel to the winding tube (22).

13. Roller blind assembly according to claim 12, wherein the length of the at least one external spring element of the spring assembly (30) is less than the length of the winding tube (22), such that the length of the winding tube (22) extends beyond the combined length of the mounting bay gap (32) and the at least one external spring element.

14. Roller blind assembly according to claims 13 or 14, further comprising:
a motor (31) mounted in the mounting bay gap (32) for operating the drive members (28).

15. Roller blind assembly according to any of claims 4 - 14, wherein the at least two spring elements provide different spring characteristics.
